# EUROPÄISCHE PATENTSCHRIFT

(11) **EP 3 101 357 B1**
(45) Veröffentlichungstag und Bekanntmachung des Hinweises auf die Patenterteilung: **02.10.2019**
(21) Anmeldenummer: 16172822.5
(22) Anmeldetag: 03.06.2016
(51) Int. Cl.: A62C 3/02, A62C 5/02, F04D 25/04, F16M 3/00, F04D 19/00, F24F 7/007, F04D 25/10, F04D 29/60, F24F 11/79

(54) **LÜFTERAGGREGAT**
FAN UNIT
GROUPE DE VENTILATEUR

(30) Priorität: 03.06.2015 AT 504562015
(43) Veröffentlichungstag der Anmeldung: 07.12.2016
(73) Patentinhaber: Rosenbauer International AG, 4060 Leonding (AT)
(72) Erfinder: MÜLLER, Michael, 8333 Riegersburg (AT); KOCH, Uwe, 4600 Wels (AT)
(74) Vertreter: Burger, Hannes

(56) Entgegenhaltungen:
- DE-B3-102012 011 273

## Beschreibung

Die Erfindung betrifft ein Lüfteraggregat für den mobilen Einsatz zur Ventilation von einem Einsatzbereich, insbesondere zur Frischluftzufuhr von mit Rauch oder Gasen kontaminierten Bereichen.

Ein auf einer Doppelschwinge montierter, mobiler Großventilator ist aus der DE 10 2012 011 273 B3 sowie der darauf basierenden WO 2013/182536 A1 bekannt geworden. Der Großventilator umfasst ein Gehäuse mit einem am oder im Gehäuse vorgesehenen Ventilatorrad und eine Hubvorrichtung zur Höhenverstellung des Gehäuses gegenüber einer bodenseitigen Aufnahme. Die Hubeinrichtung weist ein bodenseitiges Ende zur Montage an der Aufnahme und ein gehäuseseitiges Ende zur Befestigung am Gehäuse auf. Die Hubeinrichtung weist ein Koppelgetriebe in Form einer Doppelschwinge mit wenigstens zwei Lenkern auf. Jeder der beiden Lenker ist mit einem ersten Drehgelenk an seinem ersten bodenseitigen Ende an der Aufnahme und mit seinem zweiten gehäuseseitigen Ende an dem Gehäuse angeschlossen. Mit einem zusätzlichen Verstellmittel kann die relative Lage des Gehäuses des Lüfteraggregats und damit die Neigung desselben zur Änderung der Abgaberichtung des Luftstroms verändert werden. Bei weiteren Ausführungsformen ist das Gehäuse des Lüfteraggregats jeweils an beiden von der Aufnahme distanzierten Enden jedes Lenkers der Doppelschwingen direkt schwenkbar daran gelagert. Die Neigungsverstellung des Gehäuses des Lüfteraggregats kann entweder durch die Lageänderung eines Lenkers der Doppelschwingen relativ bezüglich der Basiskonsole oder durch eine Längenänderung eines Lenkers der Doppelschwingen erfolgen.

Die DE 20 2011 052 116 U1 beschreibt ein Lüfteraggregat für den mobilen Einsatz zur Frischluftzufuhr an mit Rauch kontaminierten Bereichen. Das Lüfteraggregat umfasst dabei ein Basisgestell, einen Schwenkrahmen sowie einen am Schwenkrahmen gehaltenen Axiallüfter. Das Basisgestell weist einen einer Aufstandsfläche zuwendbaren Grundrahmen sowie einen vom Grundrahmen aufragenden hinteren Rahmenteil auf. Der Schwenkrahmen ist am Basisgestell um eine in horizontaler Richtung verlaufend ausgerichtete erste Schwenkachse einer ersten Schwenkanordnung verschwenkbar gelagert. Der Axiallüfter weist eine Antriebseinheit, ein damit in Antriebsverbindung stehendes Lüfterrad und ein das Lüfterrad aufnehmendes Lüftergehäuse auf.

Die US 5,395,087 A beschreibt ein weiteres Lüfteraggregat für den mobilen Einsatz zur Erzeugung eines von diesem abgegebenen Luftstroms. Das Lüfteraggregat umfasst dabei ein Basisgestell sowie einen daran schwenkbar gelagerten Schwenkrahmen. Am Schwenkrahmen ist direkt der Axiallüfter befestigt. Der Schwenkrahmen mitsamt dem Axiallüfter kann je nach Gebrauchslage und der damit verbundenen Luftstromausrichtung um eine in bodennaher Lage am Basisgestell angeordnete Schwenkanordnung in seiner relativen Lage verschwenkt werden. Mittels einer Rastvorrichtung kann der Schwenkrahmen in dieser eingestellten Lage positioniert bezüglich des Basisgestells gehalten werden.

Ein ähnlich ausgebildetes Lüfteraggregat beschreibt die US 5,941,314 A. Das Lüfteraggregat umfasst dabei ein Basisgestell aus einem Rohrrahmen. Seitlich des Axiallüfters sind Rahmenteile vorgesehen, welche an ihrer hinteren Seite mittels eines bügelförmig ausgebildeten Handgriffs miteinander verbunden sind. An den beiden seitlichen Rahmenteilen ist der Axiallüfter in seiner Lage verschwenkbar in einer Lageranordnung mit voneinander distanziert angeordneten Lagerstellen gelagert. Damit kann auch hier eine Neigungsverstellung des Axiallüfters bezüglich des Basisgestells um die bezüglich der Aufstandsfläche ortsfeste Lageranordnung durchgeführt werden.

Der vorliegenden Erfindung liegt die Aufgabe zugrunde, ein Lüfteraggregat zu schaffen, welches geringe Transportabmessungen aufweist und trotzdem im Einsatz bzw. Betrieb vom Axiallüfter ein ausreichender Luftstrom abgegeben und dieser auch noch in seiner Strömungsrichtung in einem Winkelbereich voreinstellbar ist.

Diese Aufgabe der Erfindung wird dadurch gelöst, dass die erste Schwenkanordnung für den Heberahmen einerseits im Bereich des vom Grundrahmen aufragenden Rahmenteils und andererseits in einem ersten, dem hinteren Rahmenteil zugewendeten Endbereich des Heberahmens angeordnet ist, und der Heberahmen vom hinteren Rahmenteil in Richtung auf eine Frontseite vorragend ausgebildet ist und ein vom ersten Endbereich distanzierter zweiter Endbereich des Heberahmens in seiner vertikalen Distanz bezüglich des Grundrahmens von einer dem Grundrahmen näher liegenden Ruhestellung in eine davon angehobene Einsatzstellung verstellbar ist, und dass am Heberahmen eine zweite Schwenkanordnung mit einer zweiten Schwenkachse angeordnet ist, welche zweite Schwenkanordnung distanziert von der ersten Schwenkanordnung angeordnet ist, und dass ein Tragrahmen in seiner relativen Lage bezüglich des Grundrahmens am Heberahmen um die zweite Schwenkachse der zweiten Schwenkanordnung verschwenkbar gelagert ist, um dadurch eine Neigungsverstellung des vom Axiallüfter erzeugten Luftstroms durchführen zu können, und der Axiallüfter unter Zwischenschaltung des Tragrahmens am Heberahmen gehalten ist.

Der dadurch erzielte Vorteil liegt darin, dass so ein kompakter Basisrahmen bzw. ein Basisgestell geschaffen werden kann, welcher bzw. welches eine stabile, jedoch transportable Aufnahme für den Axiallüfter ausbildet. Da im vorliegenden Ausführungsbeispiel bevorzugt der Grundrahmen durchgängig bzw. wannenförmig ausgebildet ist, wird durch die für den Heberahmen vorgesehene Schwenkbewegung eines Endbereiches und der damit verbundenen Vergrößerung der Distanz bezüglich des Grundrahmens so eine bessere Luftströmung bodenseitig im Bereich des Axiallüfters zwischen diesem und dem Basisgestellt erreicht. Durch das Anheben für den Betrieb und das nachfolgende Absenken für das Verstauen kann so für den An- sowie Abtransport eine geringe Baugröße geschaffen werden, wobei für den Betrieb und in der angehobenen Lage des Heberahmens damit auch der Axiallüfter mitangehoben und so eine optimalere Luftströmung erzielbar ist. Durch das zusätzliche Vorsehen eines eigenen Tragrahmens für den Axiallüfter kann nicht nur ein Anheben und das damit verbundene weitere Distanzieren des Axiallüfters vom bodenseitig angeordneten Grundrahmen erzielt werden, sondern darüber hinaus auch noch eine Neigungsverstellung des Axiallüfters ermöglicht werden. Durch diese zusätzliche Neigungsverstellung kann auch noch die Abgaberichtung des vom Axiallüfter erzeugten Luftstroms an die jeweiligen Einsatzbedingungen einfach erfolgen.

Weiters ist es vorteilhaft, wenn der Heberahmen durch einen brückenartig ausgebildeten Schwenkarm gebildet ist. Durch diese brückenartige Ausbildung des Schwenkarms kann so eine zweischnittige Lagerung desselben am Basisgestell, insbesondere an dessen hinteren Rahmenteil, erfolgen. Der von der ersten Schwenkanordnung vorragende Heberahmen bildet einen auf einer Seite gelagerten Schwenkarm und kann damit mit seinem davon distanzierten Endbereich von der in einer geringeren Distanz angeordneten Ruhestellung in die davon abgehobene und eine größere Distanz zum Grundrahmen aufweisende angehobene Einsatzstellung verstellt werden.

Eine andere Ausführungsform zeichnet sich dadurch aus, dass die erste Schwenkanordnung vom Grundrahmen des Basisgestells in vertikaler Richtung davon distanziert angeordnet ist. Damit kann eine geometrische zueinander Anordnung der einzelnen Bauteile der Schwenkanordnung und des damit verbundenen Heberahmens erfolgen, sodass für den An- und Abtransport eine geringere Bauhöhe erreicht wird als im laufenden Einsatzbetrieb.

Eine weitere bevorzugte Ausführungsform ist dadurch gekennzeichnet, dass die zweite Schwenkachse der zweiten Schwenkanordnung eine parallele Ausrichtung bezüglich der ersten Schwenkachse aufweist. Dadurch kann so eine einfache Lagerung sowie Neigungsverstellung des am Tragrahmen gehaltenen Axiallüfters erzielt werden.

Eine weitere mögliche Ausführungsform hat die Merkmale, dass am Basisgestell, insbesondere dem hinteren Rahmenteil, für die Verstellung des Heberahmens von seiner Ruhestellung in die angehobene Einsatzstellung und vice versa ein Schwenkantrieb angeordnet ist. Durch das Vorsehen eines eigenen Schwenkantriebs kann so die Bedienung durch die miteinander in Eingriff stehenden Hebelanordnungen bzw. Gelenkanordnungen wesentlich erleichtert werden. Dadurch wird es auch für nicht so kräftige Personen einfacher, den Axiallüfter des Lüfteraggregats von der Ruhe- bzw. Transportstellung in die angehobene Einsatzstellung bzw. Betriebsstellung verstellen zu können.

Eine weitere Ausbildung sieht vor, dass der Schwenkantrieb mindestens eine Handhabe sowie zumindest einen Gelenkhebel umfasst, und die Handhabe um eine am hinteren Rahmenteil angeordnete dritte Schwenkachse einer dritten Schwenkanordnung verschwenkbar gelagert ist, wobei der zumindest eine Gelenkhebel an seinem ersten Ende gelenkig mit der mindestens eine Handhabe und an seinem zweiten Ende gelenkig mit dem Heberahmen verbunden ist und die dritte Schwenkachse parallel bezüglich der ersten Schwenkachse ausgerichtet ist. Damit kann schon beim ersten Gebrauch durch das Verschwenken der Handhabe die angehobene Einsatzstellung bzw. Betriebsstellung des Axiallüfters erzielt werden und darüber hinaus auch noch die Verfahrbewegung des gesamten Lüfteraggregats vom Transportmittel zum Einsatzort einfacher gestaltet werden.

Eine andere Ausführungsform zeichnet sich dadurch aus, dass die dritte Schwenkanordnung in vertikaler Richtung weiter vom Grundrahmen distanziert angeordnet ist als die erste Schwenkanordnung. Durch diese entsprechende geometrische Anordnung der einzelnen Schwenkanordnungen zueinander kann so die gesamte Bauhöhe relativ gering gehalten werden und trotzdem eine einfache Verstellbewegung für das Anheben des Heberahmens für die Betätigungsperson bzw. den Benutzer ermöglicht werden.

Eine weitere bevorzugte Ausführungsform ist dadurch gekennzeichnet, dass an der mindestens einen Handhabe unter Ausbildung eines Betätigungshebels ein von der dritten Schwenkachse distanziert angeordnetes Schwenklager angeordnet ist, an welchem Schwenklager das erste Ende des Gelenkhebels gelenkig mit der Handhabe verbunden ist. Dadurch kann auf das Vorsehen zusätzlicher Betätigungshebel verzichtet werden und so eine einfache kompakte Baueinheit geschaffen werden. Darüber hinaus kann so mittels der Handhabe nicht nur eine Erleichterung der Verfahrbewegung des Lüfteraggregats hin zum Einsatzort und von diesem zurückgeschaffen werden, sondern auch gleichzeitig das Anheben des Axiallüfters erleichtert werden.

Weiters ist es vorteilhaft, wenn in Richtung der zweiten Schwenkachse gesehen voneinander distanziert jeweils ein Gelenkhebel vorgesehen ist, wobei jeweils die zweiten Enden der Gelenkhebel in fluchtender Ausrichtung bezüglich der zweiten Schwenkachse gelenkig mit dem Heberahmen verbunden sind. Dadurch kann eine gemeinsame Anlenkung der Gelenkhebel sowie Lagerung des Tragrahmens am Heberahmen erfolgen. Darüber hinaus kann so aber auch eine beidseitig des Axiallüfters erfolgende Kraftübertragung während der Verstellbewegung sowie im laufenden Betrieb geschaffen werden. Damit kann eine stabile und kompakte Ausführung bereitgestellt werden.

Eine andere Ausführungsform zeichnet sich dadurch aus, dass die Handhabe durch einen bügelförmigen Rohrrahmen gebildet ist und dieser von einer in etwa in horizontaler Richtung ausgerichteten Transportstellung in eine in etwa in vertikaler Richtung nach oben aufragende Betriebsstellung verschwenkbar ist. Damit kann eine beidseitige, gleichzeitig erfolgende Bedienung und Verstellung der mit der Handhabe in Verbindung stehenden Gelenkhebel erfolgen.

Eine weitere mögliche Ausführungsform hat die Merkmale, dass der Tragrahmen mit seinem ersten Endabschnitt an der zweiten Schwenkanordnung mit deren zweiten Schwenkachse gelagert ist und mit seinem zweiten Endabschnitt in Richtung auf den hinteren Rahmenteil des Basisgestells ragt. Dadurch kann die Baugröße des Schwenkantriebs sowie der den Axiallüfter tragenden Bauteile relativ gering gehalten werden und trotzdem eine ausreichende Neigungsverstellung des Tragrahmens mitsamt dem daran angeordneten Axiallüfter erzielt werden.

Eine weitere Ausbildung sieht vor, dass zwischen dem Tragrahmen und dem Heberahmen eine Stellvorrichtung für die Schwenkverstellung des Tragrahmens relativ bezüglich des Heberahmens vorgesehen ist. Dadurch kann einfacher die relative Lage des Tragrahmens bezüglich des Heberahmens und der damit verbundenen Neigung des abgegebenen Luftstroms vom Axiallüfter eingestellt werden.

Eine andere Ausführungsform zeichnet sich dadurch aus, dass am Lüftergehäuse des Axiallüfters in einem Austrittsbereich des Luftstroms aus diesem ein Düsenkopf mit einer zentralen Düsenkopfachse in fluchtender Ausrichtung bezüglich einer Lüfterradachse des Lüfterrades zur Beigabe von Wasser sowie gegebenenfalls eines Schaumgemisches zum Luftstrom angeordnet ist und der Düsenkopf mehrere über den Umfang verteilt angeordnete Austrittsöffnungen aufweist. Dadurch kann zusätzlich zum verbesserten Luftstrom in diesen noch zusätzliches Löschmittel bzw. Löschmedium beigefügt werden. Durch die zentrale Anordnung kann so vom Zentrum des Axiallüfters aus eine gerichtete Zumischung in den Luftstrom hinein erfolgen.

Eine weitere bevorzugte Ausführungsform ist dadurch gekennzeichnet, dass der Düsenkopf hutförmig ausgebildet ist und im Bereich von dessen Austrittsseite durch eine Stirnwand begrenzt ist. Dadurch kann eine einfach herzustellende geometrische Form des Düsenkopfs geschaffen werden, welcher unkompliziert mit einem entsprechenden Gegenstück im Bereich des Axiallüfters, insbesondere dessen Lüftergehäuse, verbunden werden kann. Weiters ist es vorteilhaft, wenn die Austrittsöffnungen in der Stirnwand angeordnet sowie jeweils in deren Durchströmrichtung auf die von der Düsenkopfachse abgewendete Seite nach außen geneigt verlaufend ausgerichtet sind. Durch die hutförmige Ausbildung mit dem Vorsehen der Stirnwand kann so innerhalb des Düsenkopfs ein Sammelraum für das zu verteilende bzw. einzumischende Löschmittel geschaffen werden, wobei dieses durch die einzelnen Austrittsöffnungen hindurch dem Luftstrom beigefügt oder beigemischt werden kann.

Eine andere Ausführungsform zeichnet sich dadurch aus, dass eine Querschnittsabmessung der einzelnen Austrittsöffnungen in deren Durchströmrichtung jeweils abnehmend ausgebildet ist. Dadurch kann ein besser ausgerichteter, vom Düsenkopf abgegebener Löschmittelstrahl geschaffen werden, welcher in einer konzentrierteren bzw. gebündelteren Form abgegeben werden kann.

Eine weitere mögliche Ausführungsform hat die Merkmale, dass bei zumindest einzelnen der Austrittsöffnungen jeweils in deren Austrittsbereich aus der Stirnwand eine V-förmig ausgebildete Nut mit jeweils die Nut begrenzenden Nutflächen vertieft in der Stirnwand angeordnet ist. Dadurch kann zusätzlich zum gerichteten Austrittsstrahl eine noch bessere Verteilung des Löschmittelstrahls in den Luftstrom hinein erfolgen.

Eine weitere Ausbildung sieht vor, dass jeweils eine von den Nutflächen der Nut gebildete Schnittlinie mit einer Längsachse der jeweiligen Austrittsöffnung einander schneidend angeordnet ist. Dadurch kann eine symmetrische Aufteilung des austretenden Löschmittelstrahls erzielt werden.

Eine andere Ausführungsform zeichnet sich dadurch aus, dass die Nuten sternförmig verteilt über den Umfang angeordnet sind. Durch diese sternförmig verteilte Anordnung der einzelnen Nuten in deren Längserstreckung jeweils vom Zentrum des Düsenkopfs bzw. dessen Düsenkopfachse kann so eine gleichmäßigere, besser zerstäubte Zugabe des zusätzlichen Löschmittels in den Luftstrom hinein erzielt werden.

Eine weitere bevorzugte Ausführungsform ist dadurch gekennzeichnet, dass die Stirnwand des Düsenkopfs kegelstumpfförmig ausgebildet ist. Dadurch kann die Neigung der einzelnen Austrittsöffnungen im Hinblick auf deren Durchströmrichtung einfacher und symmetrischer ausgebildet werden. Darüber hinaus kann so aber auch im Bereich der Außenseite ein symmetrischerer Austritt des zusätzlichen Löschmittels aus den einzelnen Austrittsöffnungen geschaffen werden.

Weiters ist es vorteilhaft, wenn die Stirnwand des Düsenkopfs außenseitig sowie in ihrem Zentrum eine in senkrechter Richtung bezüglich der Düsenkopfachse ausgerichtete Stirnendfläche aufweist. Dadurch kann ein definierter Abschluss des Düsenkopfs erzielt werden. Darüber hinaus kann so aber auch eine bessere Anströmung der zusätzlichen Durchtrittsöffnung im Zentrumsbereich geschaffen werden.

Eine andere Ausführungsform zeichnet sich dadurch aus, dass in der Stirnwand des Düsenkopfs in ihrem Zentrumsbereich weiters zumindest eine Durchtrittsöffnung angeordnet ist. Damit kann eine zusätzliche Möglichkeit geschaffen werden, das Löschmittel noch besser dem Luftstrom beigeben zu können.

Eine weitere mögliche Ausführungsform hat die Merkmale, dass die zumindest eine Durchtrittsöffnung einen hohlzylindrisch ausgebildeten Strömungsquerschnitt aufweist. Damit kann eine gleichmäßige Ausströmung des zusätzlichen Löschmittels aus dem Düsenkopf auch aus seinem Zentrum heraus erzielt werden.

Eine weitere Ausbildung sieht vor, dass die zumindest eine Durchtrittsöffnung parallel bezüglich der Düsenkopfachse verlaufend angeordnet ist. Dadurch kann auch im Zentrum des Luftstroms dieser mit einer zusätzlichen, vordefinierten Menge an Löschmittel versetzt werden.

Eine andere Ausführungsform zeichnet sich dadurch aus, dass das Lüftergehäuse in seinem Austrittsbereich anschließend an das Lüfterrad ein über den Umfang durchgängiges, spiralförmig angeordnetes Luftleitelement aufweist. Dadurch kann sehr einfach ein Luftleitelement im Austrittsbereich des Lüftergehäuses geschaffen werden, welches in einem endlosen Herstellvorgang, wie beispielsweise einem Extrudiervorgang, hergestellt werden kann. Dadurch können zusätzliche Formkosten eingespart werden, da ansonsten eine Vielzahl unterschiedlicher ringförmig ausgebildeter Luftleitelemente auszubilden sind. Darüber hinaus kann so aber auch sehr einfach auf unterschiedliche Größenausbildungen des Lüftergehäuses Rücksicht genommen werden. Durch das durchgängig im Bereich der Vorderseite bzw. Frontseite des Lüftergehäuses angeordnete Luftleitelement kann so nicht nur ein entsprechend ausgerichteter Luftstrom in einem ausreichenden Ausmaß kanalisiert werden, sondern auch noch einfach ein Schutzelement geschaffen werden, um so ein Hineinlagen hin zu sich bewegenden Teilen, wie beispielsweise das Lüfterrad, verhindert werden.

Schließlich ist es strömungstechnisch vorteilhaft, wenn das Luftleitelement im Axialschnitt bezüglich einer Lüftergehäuseachse des Lüftergehäuses einen in etwa stromlinienförmig ausgebildeten Luftleitelementquerschnitt aufweist.

Zum besseren Verständnis der Erfindung wird diese anhand der nachfolgenden Figuren näher erläutert.

Es zeigen jeweils in stark vereinfachter, schematischer Darstellung:
- Fig. 1: ein Lüfteraggregat in dessen Einsatzstellung, in schaubildlicher Darstellung;
- Fig. 2: das Lüfteraggregat nach Fig. 1, jedoch in dessen Transportstellung, in Seitenansicht;
- Fig. 3: ein Schemabild des Stellmechanismus für den Heberahmen in dessen Transportstellung, in Seitenansicht;
- Fig. 4: ein weiteres Schemabild des Stellmechanismus bei angehobener Stellung des Heberahmens und mit ansteigend ausgerichteter Lüfterradachse, in Seitenansicht;
- Fig. 5: ein weiteres Schemabild des Stellmechanismus bei angehobener Stellung des Heberahmens und mit horizontal ausgerichteter Lüfterradachse, in Seitenansicht;
- Fig. 6: ein weiteres Schemabild des Stellmechanismus bei angehobener Stellung des Heberahmens und mit abfallend ausgerichteter Lüfterradachse, in Seitenansicht;
- Fig. 7: einen Düsenkopf einer Düsenanordnung für den Axiallüfter des Lüfteraggregats, in schaubildlicher Darstellung;
- Fig. 8: den Düsenkopf nach Fig. 7, im Axialschnitt;
- Fig. 9: das Lüftergehäuse des Axiallüfters in Ansicht auf die Auslassseite;
- Fig. 10: einen Querschnitt durch das Luftleitelement gemäß Fig. 9.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

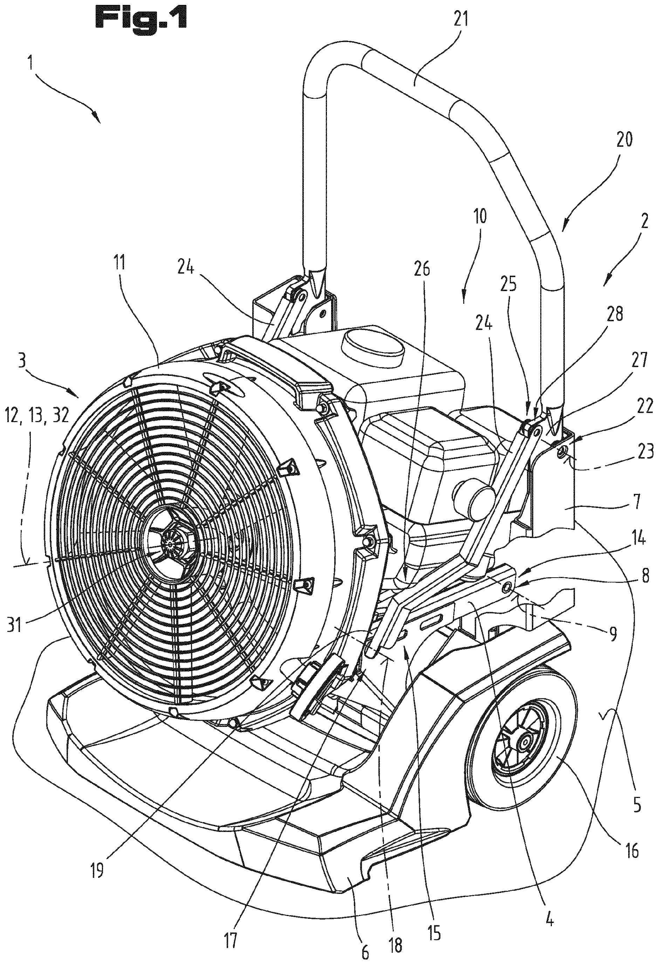

In den Fig. 1 bis 6 ist eine mögliche Ausbildung eines Lüfteraggregats 1 für den mobilen Einsatz zur Ventilation, insbesondere zur Frischluftzufuhr von mit Rauch und/oder anderen Gasen, Gerüchen oder dergleichen kontaminierten Bereichen sowie gegebenenfalls für die zusätzliche Zufuhr eines Löschmittels gezeigt. Das Lüfteraggregat 1 ist derart ausgebildet, dass dieses zumeist von zumindest einer Person für den bestimmungsgemäßen Gebrauch von einem Einsatzfahrzeug händisch zum Einsatzort verbracht werden kann und dort zumindest für die Ventilation des oder der Einsatzbereiche eingesetzt wird. In diesem Sinne wird der Begriff "mobil" verstanden. Das Lüfteraggregat 1 umfasst ein Basisgestell 2, einen Axiallüfter 3, welcher an einem am Basisgestell 2 bevorzugt schwenkbar gelagerten Heberahmen 4 gehalten ist. Der Heberahmen 4 kann auch als Schwenkrahmen bezeichnet werden.

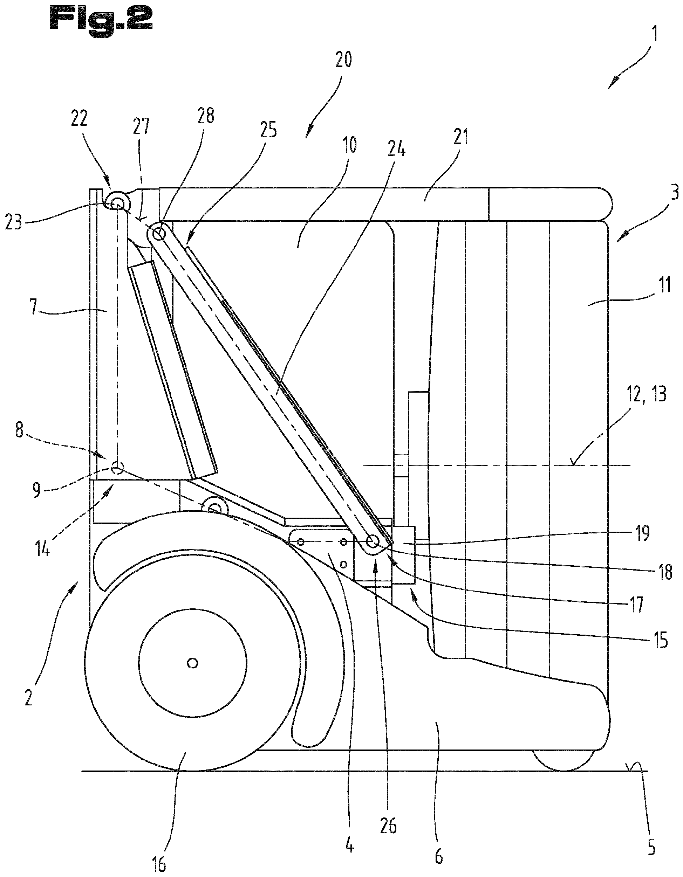

Das Lüfteraggregat 1 kann auf einer durch einen Strich in der Fig. 2 angedeuteten Aufstandsfläche 5 abgestellt oder aufgestellt sein. Das Basisgestell 2 kann einen eigenen Rahmenaufbau aus mehreren Einzelteilen umfassen, wobei hier nur vereinfacht ein der Aufstandsfläche 5 und damit bodenseitiger Grundrahmen 6 sowie zumindest ein vom Grundrahmen 6 aufragender hinterer Rahmenteil 7 näher bezeichnet sind.

Der Heberahmen 4 kann um eine von einer ersten Schwenkanordnung 8 definierten ersten Schwenkachse 9 relativ bezüglich des Basisgestells 2 an diesem schwenkbar gelagert sein. Dabei ist die erste Schwenkachse 9 bei horizontaler Ausrichtung der Aufstandsfläche 5 ebenfalls horizontal und somit parallel dazu verlaufend ausgerichtet. Weiters kann die erste Schwenkanordnung 8 vom Grundrahmen 6 des Basisgestells 2 in vertikaler Richtung davon distanziert angeordnet sein. Anstelle der Schwenkbewegung um die erste Schwenkachse 9 wäre aber auch eine andere Bewegungsform des Anhebens des Heberahmens 4, wie z.B. durch eine Hebelanordnung, eine Parallelogramm-Hebelanordnung oder eine Kulissenanordnung möglich.

Der Axiallüfter 3 kann zumindest eine Antriebseinheit 10, ein damit in Antriebsverbindung stehendes Lüfterrad sowie ein das Lüfterrad aufnehmendes Lüftergehäuse 11 umfassen. Das Lüfterrad ist um eine Lüfterradachse 12 drehbar innerhalb des Lüftergehäuses 11 angeordnet, wie dies allgemein bekannt ist. Bevorzugt ist die Lüfterradachse 12 und eine vom Lüftergehäuse 11 definierte Lüftergehäuseachse13 zueinander fluchtend bzw. deckungsgleich ausgerichtet.

Die erste Schwenkanordnung 8 für den Heberahmen 4 ist bei diesem hier gezeigten Ausführungsbeispiel im Bereich des vom Grundrahmen 6 aufragenden Rahmenteils 7 sowie in einem ersten Endbereich 14 des Heberahmens 4 angeordnet. Der erste Endbereich 14 des Heberahmens 4 ist dabei dem hinteren Rahmenteil 7 des Basisgestells 2 zugewendet. Weiters ragt damit der Heberahmen 4 vom hinteren Rahmenteil 7 in Richtung auf eine Frontseite des Lüfteraggregats 1vor. Der Heberahmen 4 kann einen brückenartig ausgebildeten Schwenkarm ausbilden.

Durch dieses nach vorne Vorragen des Heberahmens 4 mit seinem zweiten Endbereich 15 vom ersten Endbereich 14 ist es nunmehr möglich, dass der zweiter Endbereich 15 des Heberahmens 4 in seiner vertikalen Distanz bezüglich des Grundrahmens 6 von einer dem Grundrahmen 6 näher liegenden Ruhestellung in eine davon angehobene Einsatzstellung mit einer dazu größeren Distanz verstellbar ist.

Am Basisgestell 2 kann weiters noch ein Radsatz 16 gelagert sein, mittels welchem das Basisgestell 2 mit all den darauf gehaltenen Anbauteilen händisch verfahrbar ausgebildet ist. Der Radsatz 16 ist im hinteren Teil des Grundrahmens 6 bevorzugt ortsfest an diesem angeordnet. Der Grundrahmen 6 kann in Form einer Art Aufnahmeschale ausgebildet sein, wobei von einer bodenseitigen Basis jeweils seitlich Wangen aufragen können.

An der hinteren Seite des Grundrahmens 6 ragt weiters bei diesem Ausführungsbeispiel jeweils in den Eckbereichen ein Steher nach oben, welche gemeinsam den hinteren Rahmenteil 7 ausbilden. Die Steher können aus einem oder mehreren abgekanteten Blechteilen gebildet sein, welche am Grundrahmen 6 befestigt sind und weiters noch in Querrichtung - also in Richtung der ersten Schwenkachse 9 - voneinander distanziert sind angeordnet. Die Schwenkachse 9 kann eine gedachte oder aber auch eine körperliche, durchgehende Achse sein, welche die erste Schwenkanordnung 8 mit entsprechenden dazugehörigen Lagerstellen ausbildet.

Am Heberahmen 4 ist eine zweite Schwenkanordnung 17 mit einer zweiten Schwenkachse 18 angeordnet oder ausgebildet, wobei die zweite Schwenkanordnung 17 distanziert von der ersten Schwenkanordnung 8 angeordnet ist. Die zweite Schwenkachse 18 weist ihrerseits eine parallele Ausrichtung bezüglich der ersten Schwenkachse 9 auf. Bevorzugt sind die beiden Schwenkanordnungen 8, 17 jeweils in einem Endbereich des Heberahmens 4 angeordnet oder ausgebildet.

Weiters ist noch ein eigener Tragrahmen 19 vorgesehen, welcher in seiner relativen Lage bezüglich des Grundrahmens 6 verschwenkbar am Heberahmen 4 gelagert ist. Dazu ist zwischen dem Tragrahmen 19 und dem Heberahmen 4 eine Lageranordnung vorgesehen. Dadurch kann eine Neigungsverstellung des vom Axiallüfter 3 erzeugten Luftstroms durchgeführt werden. Der Axiallüfter 3 kann damit unter Zwischenschaltung des Tragrahmens 19 am Heberahmen 4 gehalten sein. Dies bedeutet, dass die gesamte Baueinheit des Axiallüfters 3 am Tragrahmen 19 gehalten oder daran befestigt ist. Durch die nachfolgend noch näher beschriebene Verstellmöglichkeit des Tragrahmens 19 in seiner relativen Lage bezüglich des Heberahmens 4 kann damit aber auch die Ausrichtung des Axiallüfters 3 und weiters auch die Abgaberichtung des vom Axiallüfter 3 erzeugten Luftstroms durchgeführt werden. Bevorzugt ist diese Lageranordnung derart angeordnet bzw. ausgerichtet, dass diese in fluchtender Ausrichtung bezüglich der zweiten Schwenkachse 18 angeordnet ist. Der Tragrahmen 19 ist damit um die zweite Schwenkachse 18 des Heberahmens 4 verschwenkbar gelagert. Die zweite Schwenkachse 18 kann durch eine gedachte Achse oder aber auch durch eine körperliche Achse gebildet sein.

Für die Durchführung der Stellbewegung des Heberahmens 4 um die erste Schwenkachse 9 und dem damit verbundenen Anheben seines zweiten Endbereichs 15 kann ein eigener Schwenkantrieb 20 vorgesehen sein. Mit diesem Schwenkantrieb 20 kann sowohl das Anheben des Endbereichs 15 aus seiner Ruhestellung in die Einsatzstellung als auch das Zurückverstellen und das damit verbundene Absenken zurück in die Ruhestellung durchgeführt werden. Der zweite Endbereich 15 des Heberahmens 4 mit der dort angeordneten oder ausgebildeten zweiten Schwenkanordnung 17 führt eine Bewegung entlang eines Kreisabschnittes um die erste Schwenkachse 9 durch. Der Schwenkantrieb 20 ist am Basisgestell 2, insbesondere dem hinteren Rahmenteil 7 angeordnet.

Der Schwenkantrieb 20 umfasst mindestens eine Handhabe 21, welche in einer dritten Schwenkanordnung 22 um eine von dieser definierten dritten Schwenkachse 23 am Basisgestell 2, insbesondere dem hinteren Rahmenteil 7, verschwenkbar gelagert ist. Die dritte Schwenkachse 23 ist ebenfalls parallel bezüglich der ersten Schwenkachse 9 ausgerichtet. Bevorzugt ist die dritte Schwenkanordnung 22 in vertikaler Richtung weiter vom Grundrahmen 6 distanziert angeordnet ist als die erste Schwenkanordnung 8 und befindet sich somit oberhalb der ersten Schwenkanordnung 8.

Weiters umfasst der Schwenkantrieb 20 zumindest einen Gelenkhebel 24, welcher ein erstes Ende 25 und ein davon distanziertes zweites Ende 26 aufweist. Das erste Ende 25 des Gelenkhebels 24 ist gelenkig mit der Handhabe 21 und das zweite Ende 26 ist gelenkig mit dem Heberahmen 4 verbunden.

An der mindestens einen Handhabe 21 ist unter Ausbildung eines Betätigungshebels 27 ein von der dritten Schwenkachse 23 der dritten Schwenkanordnung 22 distanziert angeordnetes Schwenklager 28 angeordnet oder ausgebildet. Der Betätigungshebels 27 ist bevorzugt integraler Bestandteil der Handhabe 21 bzw. wird dieser von der Handhabe 21 mit ausgebildet. Das zuvor beschriebene erste Ende 25 des Gelenkhebels 24 ist gelenkig am Schwenklager 28 angeordnet und damit zugfest gehalten. So ist der Gelenkhebel 24 an einer Seite mit der Handhabe 21 verbunden. An seinem zweiten Ende 26 ist der Gelenkhebel 24 gelenkig mit dem Heberahmen 4 verbunden. Bevorzugt erfolgt diese Anbindung in fluchtender Ausrichtung bezüglich der zweiten Schwenkachse 18, um welche auch der Tragrahmen 19 verschwenkbar gelagert ist.

Um eine gleichmäßige Verstellbewegung des Heberahmens 4 mitsamt dem darauf gehaltenen Axiallüfter 3 bezüglich des Basisgestells 2 durchführen zu können, ist in Richtung der zweiten Schwenkachse 18 gesehen voneinander distanziert jeweils einer der Gelenkhebel 24 vorgesehen. Damit kann der Axiallüfter 3 in dem dazwischen ausgebildeten Freiraum aufgenommen werden. Die Handhabe 21 kann durch einen bügelförmig bzw. U-förmig ausgebildeten Rohrrahmen gebildet sein. Die beiden Schenkel des Rohrrahmens sind mittels deren Lageranordnungen um die dritte Schwenkachse 23 der dritten Schwenkanordnung 22 verschwenkbar am hinteren Rahmenteil 7 gelagert. In der Ruhestellung des Heberahmens 4, also der abgesenkten Stellung des Axiallüfters 3, weist die Handhabe 21 oder der diese bildende Rohrrahmen eine in etwa horizontale Ausrichtung auf, welche auch als Transportstellung für den An- sowie Abtransport bezeichnet werden kann. Diese Stellung ist in der Fig. 2 dargestellt, wobei die Handhabe 21 von dem bzw. von den hinteren Rahmenteilen 7 in Richtung der Frontseite nach vorne vorragt. Die hochgeschwenkte bzw. hochgeklappte Betriebsstellung der Handhabe 21, insbesondere des Rohrrahmens, ist in der Fig. 1 dargestellt. Dabei ragt die Handhabe 21 bzw. der diese bildende Rohrrahmen in etwa in senkrechter Richtung vertikal nach oben. Der Schwenkwinkel zwischen den beiden zuvor beschriebenen Stellungen beträgt ca. 90°. Es wäre aber auch möglich, die Handhabe 21 oder den durch diese gebildeten Rohrrahmen von einer hinterhalb der hinteren Rahmenteile 7 liegenden, in Richtung auf die Aufstandsfläche 5 zeigenden Ausrichtung in eine nach hinten ragende Betriebsstellung um ca. 90° hoch zu schwenken. Darüber hinaus wäre es aber auch möglich, diese nach hinten ragende Stellung für den Transport zum Einsatzort zu nutzen - als Zwischenstellung - und erst am Einsatzort die Handhabe in eine senkrecht nach oben ragende Stellung zu verschwenken. Damit könnte die Hubbewegung und damit verbunden auch der Verstellweg vergrößert werden.

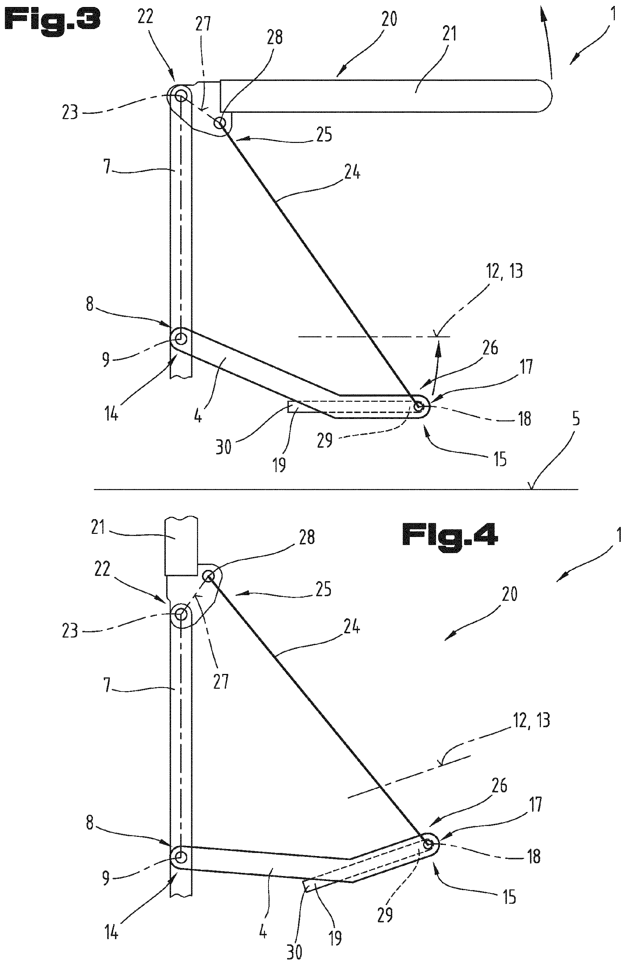

In den Fig. 3 bis 6 sind unterschiedliche Stellungen des Heberahmens 4 sowie des am Heberahmen 4 gelagerten Tragrahmens 19 stark vereinfacht schematisiert dargestellt. Der Tragrahmen 19 kann bevorzugt mit seinem ersten Endabschnitt 29 an der zweiten Schwenkanordnung 17 mit deren zweiten Schwenkachse 18 am Heberahmen 4 gelagert sein. Ein zweiter Endabschnitt 30 des Tragrahmens 19 ragt bei diesem Ausführungsbeispiel in Richtung auf den hinteren Rahmenteil 7 des Basisgestells 2. Zur Einstellung der relativen Lage des Tragrahmens 19 und der damit verbundenen Neigung der Lüfterradachse 12 oder der Lüftergehäuseachse 13 bezüglich der Aufstandsfläche 5 kann eine nicht näher dargestellte und bezeichnete Stellvorrichtung dienen. Die Stellvorrichtung kann z.B. durch einen justierbar ausgebildeten Seilzug und/oder Bowdenzug gegebenenfalls im Zusammenwirken mit zumindest einer Gasdruckfeder gebildet sein. Es könnte aber auch eine einstellbare und justierbare Gasdruckfeder oder mehrere derselben eingesetzt werden. Die Stellvorrichtung kann z.B. zwischen dem Tragrahmen 19 und dem Heberahmen 4 angeordnet sein.

Die Fig. 3 zeigt vereinfacht die Ausrichtung und Positionen der einzelnen zueinander verschwenkbaren Bauteile, nämlich des Heberahmens 4, des Tragrahmens 19, der Handhabe 21 mit deren Betätigungshebel 27 sowie des Gelenkhebels 24 in deren Ruhestellung bzw. der Transportstellung. Die Handhabe 21 bzw. der diese bildende Rohrbügel weist eine in etwa horizontale bzw. parallele Ausrichtung bezüglich der Aufstandsfläche 5 auf. Der Heberahmen 4 ist an der ersten Schwenkanordnung 8 am hinteren Rahmenteil 7 gelagert und befindet sich in der abgesenkten Ruhestellung bzw. Transportstellung. Der Tragrahmen 19 weist hier eine in etwa horizontale Ausrichtung bezüglich der Aufstandsfläche 5 auf, wodurch auch der am Tragrahmen 19 gehaltene Axiallüfter 3 und damit dessen Lüfterradachse 12 sowie die Lüftergehäuseachse 13 ebenfalls eine in etwa horizontale Ausrichtung aufweisen und somit parallel bezüglich der Aufstandsfläche 5 verlaufen.

Der oder die Gelenkhebel 24 erstrecken sich jeweils zwischen dem zweiten Endbereich 15 des Heberahmens 4 und dem Schwenklager 28 an der Handhabe 21. Da an der Handhabe 21 auch gleichzeitig zwischen deren dritten Schwenkanordnung 22 und dem Schwenklager 28 der Betätigungshebel 27 ausgebildet ist, kann mittels der Handhabe 21 während deren Verstellbewegung von der Transportstellung in die Betriebsstellung durch die damit verbundene Mitverschwenkung des Betätigungshebels 27 der oder die Gelenkhebel 24 mitbewegt werden und in weiterer Folge der zweite Endbereich 15 des Heberahmens 4 angehoben werden.

Die angehobene Stellung des Heberahmens 4 ist in der Fig. 4 dargestellt. Durch diese Schwenkbewegung wird bei der vorliegenden geometrischen Anordnung der einzelnen Bauteile sowie Lagerstellen zueinander der Tragrahmen 19 in eine nach hinten geneigte Position verbracht, wodurch die Lüfterradachse 12 sowie die Lüftergehäuseachse 13 nach vorne oben ansteigend ausgerichtet sind. Der vom Axiallüfter 3 erzeugte Luftstrom wird geneigt nach oben abgegeben. Der eingeschlossene Winkel zwischen der Lüfterradachse 12 bzw. der Lüftergehäuseachse 13 und der Aufstandsfläche 5 kann z.B. 15° bis 30° und auch mehr betragen. Der Winkel kann z.B. auch ca. 20° betragen.

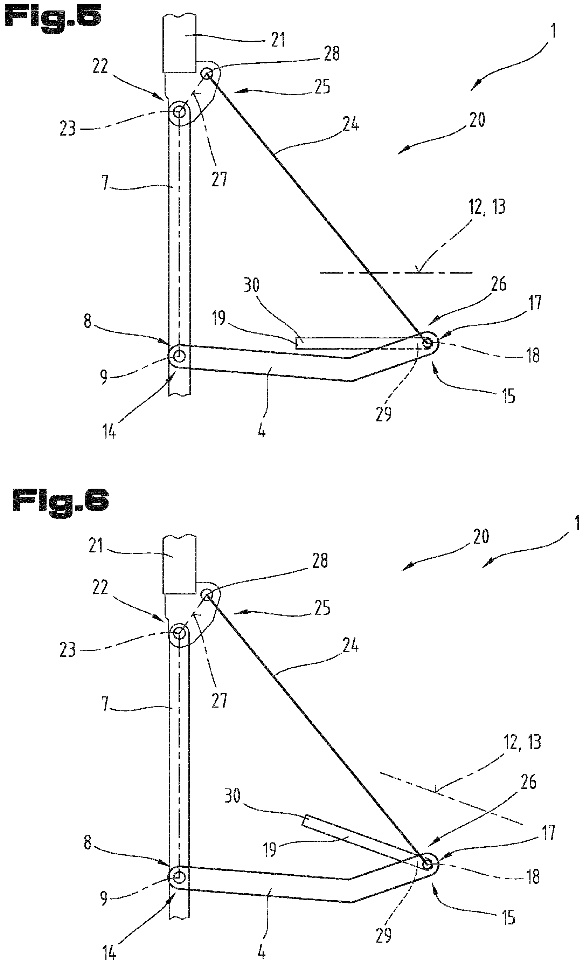

In der Fig. 5 ist grundsätzlich die gleiche Stellung des Heberahmens 4 wie in der Fig. 3 gezeigt, jedoch der Tragrahmen 19 und damit auch der Axiallüfter 3 mit der Lüfterradachse 12 bzw. der Lüftergehäuseachse 13 in eine in etwa horizontale Ausrichtung verschwenkt worden ist. Der Verstellvorgang kann mit der zuvor beschriebenen, jedoch nicht näher dargestellten und bezeichneten Stellvorrichtung durchgeführt werden.

Schließlich ist in der Fig. 6 noch gezeigt, dass der Tragrahmen 19 und damit auch der Axiallüfter 3 mit der Lüfterradachse 12 bzw. der Lüftergehäuseachse 13 mit seinem zweiten Endabschnitt 30 um die zweite Schwenkachse 18 der zweiten Schwenkanordnung 17 weiter nach oben verschwenkt worden ist. Damit ist der Axiallüfter 3 mit der Lüfterradachse 12 bzw. der Lüftergehäuseachse 13 nach vorne unten abfallend ausgerichtet. Der abfallende Winkel kann den gleichen Betrag bzw. Wert aufweisen, wie dieser zuvor für den nach oben gerichteten Winkel beschrieben worden ist. So kann der vom Axiallüfter 3 erzeugte Luftstrom in seiner Neigung bezüglich der Aufstandsfläche 5 gerichtet verschwenkt und an die jeweiligen Einsatzbedingungen angepasst werden.

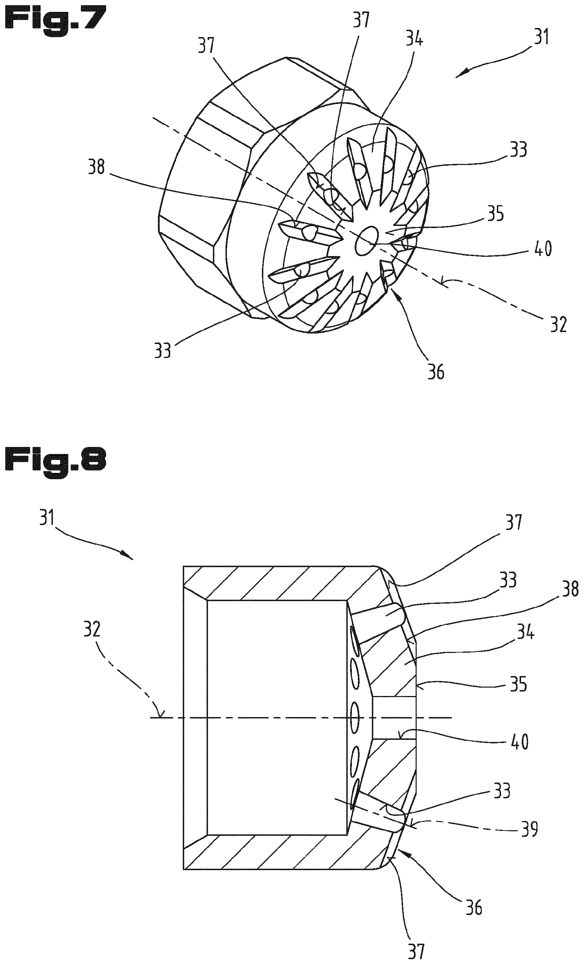

In den Fig. 7 und 8 ist eine weitere und gegebenenfalls für sich eigenständige Ausführungsform eines Bauteils für das Lüfteraggregat 1, insbesondere dessen Axiallüfter 3 gezeigt, wobei wiederum für gleiche Teile gleiche Bezugszeichen bzw. Bauteilbezeichnungen wie in den vorangegangenen Fig. 1 bis 6 verwendet werden. Um unnötige Wiederholungen zu vermeiden, wird auf die detaillierte Beschreibung in den vorangegangenen Fig. 1 bis 6 hingewiesen bzw. Bezug genommen.

Der vom Axiallüfter 3 erzeugte bzw. abgegebene Luftstrom kann zusätzlich noch mit einem bevorzugten flüssigen Zusatzmedium, insbesondere einem Löschmittel und/oder Löschmedium, versetzt werden. Dazu ist, wie dies aus der Fig. 2 im Zentrum des Axiallüfters 3 im Bereich der Lüfterradachse 12 sowie der Lüftergehäuseachse 13 zu ersehen ist, in einem Austrittsbereich des Luftstroms aus dem Lüftergehäuse 11 an diesem ein Düsenkopf 31 mit einer zentralen Düsenkopfachse 32 angeordnet bzw. vorgesehen. Die zentrale Düsenkopfachse 32 ist dabei bevorzugt in fluchtender Ausrichtung bezüglich der Lüfterradachse 12 des Lüfterrades und/oder der Lüftergehäuseachse 13 angeordnet. Der Düsenkopf 31 weist dabei mehrere über den Umfang bevorzugt gleichmäßig verteilt angeordnete Austrittsöffnung 33 auf. Die über den Umfang verteilt angeordneten Austrittsöffnungen 33 dienen dazu, das dem Düsenkopf 31 über eine oder mehrere nicht näher dargestellte Zuleitungen zugeführte Zusatzmedium dem umfänglich vorbei strömenden Luftstrom beizufügen oder zuzumischen.

Der Düsenkopf 31 ist bevorzugt hutförmig ausgebildet und ist im Bereich von dessen Austrittsseite durch eine Stirnwand 34 begrenzt bzw. abgeschlossen. Die Stirnwand 34 des Düsenkopfs 31 kann ihrerseits vom äußeren Umfangsrand hin zum Zentrum und damit hin auf die Düsenkopfachse 32 kegelstumpfförmig ausgebildet sein. Weiters kann die Stirnwand 34 außenseitig sowie in ihrem Zentrum eine in senkrechter Richtung bezüglich der Düsenkopfachse 32 ausgerichtete Stirnendfläche 35 aufweisen.

Die mehreren über den Umfang verteilt angeordneten Austrittsöffnungen 33 sind hier direkt in der Stirnwand 34 angeordnet und auch dort ausgebildet. Darüber hinaus können die einzelnen Austrittsöffnungen 33 jeweils in deren Durchströmrichtung auf die von der Düsenkopfachse 32 abgewendete Seite nach außen geneigt verlaufend ausgerichtet sein. Dadurch wird es möglich, das durch die Austrittsöffnungen 33 hindurch tretende Zusatzmedium in den den Düsenkopf 31 umfänglich umströmenden Luftstrom hinein zu verbringen. Weiters ist noch aus der Fig. 7 zu ersehen, dass eine Querschnittsabmessung der einzelnen Austrittsöffnungen 33 in deren Durchströmrichtung jeweils vom Eintrittsbereich hin zum Austrittsbereich abnehmend ausgebildet ist. Damit kann eine gewisse Düsenwirkung sowie Kanalisierung des aus dem Zusatzmedium gebildeten Löschmediumstroms bzw. Löschmittelstroms erreicht werden.

Weiters ist es noch möglich, dass bei zumindest einzelnen der Austrittsöffnungen 33 jeweils in deren Austrittsbereich aus der Stirnwand 34 eine V-förmig ausgebildete Nut 36 vertieft in der Stirnwand 34 angeordnet ist. Die einzelnen Nuten 36 werden dabei jeweils von Nutflächen 37 begrenzt, welche aufeinander zulaufend sowie in Längsrichtung parallel zueinander verlaufend ausgerichtet sind. In jenem Bereich, in welchem sich die Nutflächen 37 einander schneiden, bilden diese bei jeder Nut eine bevorzugt geradlinig verlaufende Schnittlinie 38 aus. Jede der einzelnen Nuten 36 ist derart ausgerichtet, dass die von deren Nutflächen 37 gebildete Schnittlinie 38 mit einer Längsachse 39 der jeweiligen AustrittsÖffnung 33 einander schneidend angeordnet ist. Weiters ist es vorteilhaft, wenn die Nuten 36 sternförmig verteilt über den Umfang angeordnet sind. Durch die zusätzliche Anordnung der Nuten 36 bei zumindest einzelnen, bevorzugt jedoch bei allen der Austrittsöffnungen 33, kann eine bessere Verteilung und zusätzliche Auffächerung und Zerstäubung des aus den Austrittsöffnungen 33 austretenden Zusatzmediums in den Luftstrom hinein erfolgen.

Zusätzlich ist es noch möglich, dass in der Stirnwand 34 des Düsenkopfs 31 in ihrem Zentrumsbereich - also im Bereich der Düsenkopfachse 32 - zumindest eine zusätzliche Durchtrittsöffnung 40 angeordnet oder ausgebildet ist. Im Gegensatz zu den zuvor beschriebenen Austrittsöffnungen 33 kann die zumindest eine Durchtrittsöffnung 40 einen hohlzylindrisch ausgebildeten Strömungsquerschnitt über ihre Längserstreckung gesehen aufweisen. Es könnte aber auch eine kegelförmig verjüngende Ausbildung des Strömungsquerschnitts gewählt werden. Weiters ist bei diesem Ausführungsbeispiel die zumindest eine Durchtrittsöffnung 40 parallel bezüglich der Düsenkopfachse 32 verlaufend in der Stirnwand 34 angeordnet. Damit kann auch in das Zentrum des sich nach dem Austritt aus dem Lüftergehäuse 11 zusammengeführten Luftstroms auch hier ein zusätzliches als Löschmittel bzw. Löschmedium dienendes Zusatzmedium zugeführt werden.

Bei dem durch den Düsenkopf 31 zugeführten Zusatzmedium kann es sich bevorzugt um Wasser handeln. Zusätzlich kann dem Wasser auch noch ein schaumbildendes Zusatzmittel vor dem Durchtritt durch den Düsenkopf 31 beigemischt bzw. beigegeben werden.

Der Düsenkopf 31 kann in Kombination mit dem Axiallüfter 3 alleinig eine für sich unabhängige Ausbildung darstellen.

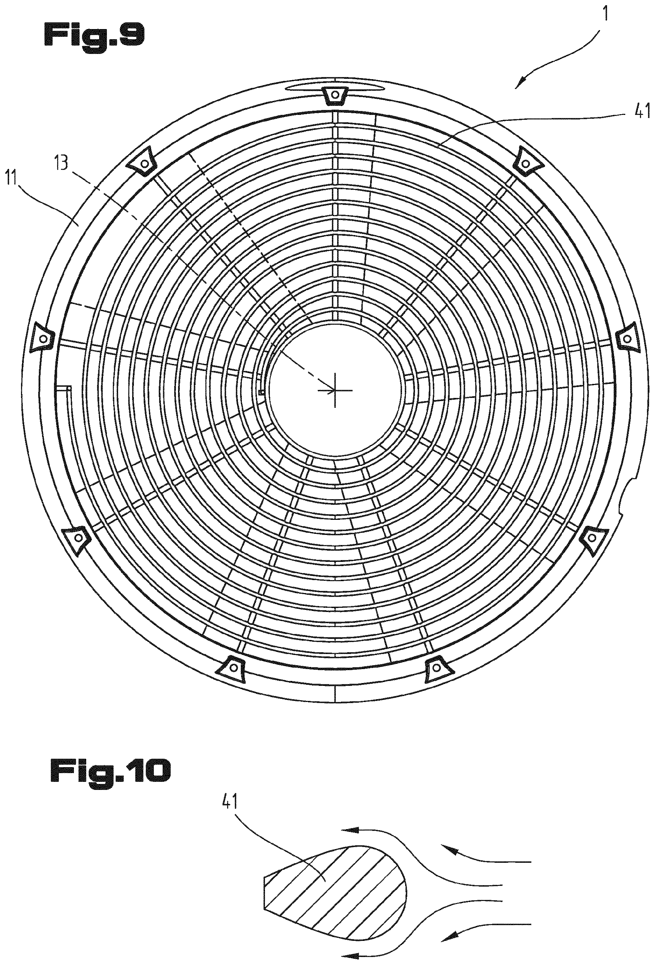

In der Fig. 9 und 10 ist eine weitere und gegebenenfalls für sich eigenständige Ausführungsform eines Bauteils für das Lüfteraggregat 1, insbesondere dessen Axiallüfter 3, gezeigt, wobei wiederum für gleiche Teile gleiche Bezugszeichen bzw. Bauteilbezeichnungen wie in den vorangegangenen Fig. 1 bis 8 verwendet werden. Um unnötige Wiederholungen zu vermeiden, wird auf die detaillierte Beschreibung in den vorangegangenen Fig. 1 bis 8 hingewiesen bzw. Bezug genommen.

Zur Vereinfachung des Aufbaus des Ausströmbereichs aus dem Lüftergehäuse 11 kann in dessen Austrittsbereich anschließend an das Lüfterrad ein spiralförmig angeordnetes, durchgängiges Luftleitelement 41 angeordnet bzw. vorgesehen sein. Dabei werden nicht, wie üblicherweise verwendet, mehrere konzentrisch zueinander angeordnete Luftleitelemente vorgesehen, sondern es wird ausgehend vom äußeren Randbereich des Lüftergehäuses 11 hin zu dessen Zentrum ein durchgängiges, in einer Spirale angeordnetes Luftleitelement 41 verwendet. Dadurch wird es möglich, beispielsweise das Luftleitelement 41 in einem endlosen Strang mit einer entsprechenden Profilgeometrie ausbilden zu können. Nach entsprechender Ablängung wird dann das durchgängig ausgebildete Luftleitelement 41 an hier nicht näher bezeichneten Haltearmen fixiert bzw. gehalten und dabei in einem bevorzugt gleichmäßigen Abstand zueinander spiralförmig im Bereich des Austrittsbereichs angeordnet.

Günstige Strömungsverhältnisse können dann erzielt werden, wenn auch ein Luftleitelementquerschnitt des Luftleitelement 41 im Axialschnitt bezüglich der Lüftergehäuseachse 13 somit in Durchströmrichtung - in etwa stromlinienförmig ausgebildet ist, wie dies aus der Fig. 10 zu ersehen ist. Der austrittsseitige Endbereich des Luftleitelements 41 kann auch noch geringfügig abgeflacht ausgebildet sein. Damit können Strömungsverluste verkleinert und auch eine bessere Ausrichtung und Kanalisierung des abgegebenen Luftstroms erzielt werden. Das Luftleitelement 41 kann auch noch als Schutzgitter dienen, um ein unbeabsichtigtes Hineingreifen während des Betriebs hin zum rotierenden Lüfterrad zu verhindern.

Grundsätzlich kann jede der zuvor beschriebenen Schwenkanordnungen 8, 17, 22 auch mehrere voneinander distanziert angeordnete Lagerstellen aufweisen, wobei die jeweiligen zusammengehörigen Lagerstellen einer jeder der Schwenkanordnungen 8, 17, 22 in fluchtender Ausrichtung zueinander angeordnet sind. Bei mehreren Lagerstellen je Schwenkanordnung 8, 17, 22 sind diese jeweils auf der gemeinsamen Schwenkachse 9, 18, 23 angeordnet oder ausgebildet. Damit wird es möglich, die jeweiligen Lagerstellen der einzelnen Schwenkanordnungen 8, 17, 22 seitlich und damit in Querrichtung voneinander distanziert anzuordnen. Gleiches gilt auch für die Anordnung und Ausbildung der Schwenklager 28.

Zwischen dem Lüfterrad und dem austrittsseitig angeordneten Luftleitelement 41 des Lüftergehäuses 11 können auch noch zusätzliche Leitelemente vorgesehen sein, welche den vom Lüfterrad erzeugten Luftstrom in eine vorgegebene bzw. ausgerichtete Strömungsrichtung lenken bzw. umlenken. Dazu weisen die einzelnen Leitelemente, die bevorzug sternförmig über den Umfang verteilt angeordnet sind, einen gekrümmt ausgebildeten Längsverlauf in Durchströmrichtung auf. Dieser Längsverlauf kann auch eine in etwa tragflügelartige Krümmung aufweisen. Weiters können die einzelnen Leitelemente beidseits in entsprechend ausgebildete Halteausnehmungen einsteckbar ausgebildet sein. Da im Bereich des Zentrums und auch außenseitig das Lüftergehäuse 11 rohrförmige ausgebildete Gehäuseteile aufweist, kann eine beidseitige Befestigung bevorzugt auch eine austauschbare Halterung der einzelnen Leitelemente an den Gehäuseteilen geschaffen werden.

Weiters kann auch das Lüftergehäuse 11 in Strömungsrichtung gesehen, geteilt ausgebildet sein. Die Kopplung der zumindest zwei Lüftergehäuseteile kann an den einander zugewendeten Endabschnitten z.B. durch eine Verriegelungsvorrichtung und/oder eine Rastvorrichtung erfolgen. Dies könnte z.B. ein Bajonettverschluss oder dergleichen sein. Eine zusätzliche Verschraubung zur sicheren gegenseitigen Lagefixierung wäre auch noch möglich.

Darüber hinaus wäre es aber auch noch möglich, dass der Axiallüfter 3 zusätzlich zum erzeugten Luftstrom oder aber auch durch diesen, ein Zusatzlöschmittel in Form eines Löschschaums abgibt. Der Zusatz in den Luftstrom kann durch den zuvor beschriebenen Düsenkopf 31 beigegeben werden. Dazu kann zusätzlich ein sogenanntes Schaumnetz im Ausströmbereich des Axiallüfters, insbesondere im Anschluss an das Luftleitelement 41, angeordnet werden.

Wie weiters bekannt, kann der Antriebsmotor der Antriebseinheit 10 auch noch eine eigene Lichtmaschine mit antreiben. Es kann der Antriebsmotor durch eine Verbrennungskraftmaschine gebildet sein. Damit kann direkt im Bereich des Lüfteraggregats 1 durch diesen Stromerzeuger ein oder mehrere Beleuchtungsmittel mit elektrischer Energie versorgt werden. So kann auch bei Dunkelheit eine Beleuchtung des Arbeitsfeldes um das Lüfteraggregat 1 herum zumindest während dessen Betrieb erfolgen. Zusätzlich wäre auch noch die Anordnung eines Energiespeichers in Form einer Batterie möglich.

Die Ausführungsbeispiele zeigen mögliche Ausführungsvarianten des Lüfteraggregats 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt, solange diese Variationsmöglichkeit durch den Schutzumfang der Ansprüche abgedeckt ist.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1, 2, 3, 4, 5, 6; 7, 8; 9, 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Lüfteraggregats 1 dieses bzw. dessen Bestandteile teilweise unmaßstäblich und/oder vergrößert und/oder verkleinert dargestellt wurden.

**Bezugszeichenliste**

| | | | |
|---|---|---|---|
| 1 | Lüfteraggregat | 31 | Düsenkopf |
| 2 | Basisgestell | 32 | Düsenkopfachse |
| 3 | Axiallüfter | 33 | Austrittsöffnung |
| 4 | Heberahmen | 34 | Stirnwand |
| 5 | Aufstandsfläche | 35 | Stirnendfläche |
| 6 | Grundrahmen | 36 | Nut |
| 7 | Rahmenteil | 37 | Nutfläche |
| 8 | erste Schwenkanordnung | 38 | Schnittlinie |
| 9 | erste Schwenkachse | 39 | Längsachse |
| 10 | Antriebseinheit | 40 | Durchtrittsöffnung |
| 11 | Lüftergehäuse | 41 | Luftleitelement |
| 12 | Lüfterradachse | | |
| 13 | Lüftergehäuseachse | | |
| 14 | erster Endbereich | | |
| 15 | zweiter Endbereich | | |
| 16 | Radsatz | | |
| 17 | zweite Schwenkanordnung | | |
| 18 | zweite Schwenkachse | | |
| 19 | Tragrahmen | | |
| 20 | Schwenkantrieb | | |
| 21 | Handhabe | | |
| 22 | dritte Schwenkanordnung | | |
| 23 | dritte Schwenkachse | | |
| 24 | Gelenkhebel | | |
| 25 | erstes Ende | | |
| 26 | zweites Ende | | |
| 27 | Betätigungshebel | | |
| 28 | Schwenklager | | |
| 29 | erster Endabschnitt | | |
| 30 | zweiter Endabschnitt | | |

## Patentansprüche

1. Lüfteraggregat (1) für den mobilen Einsatz zur Ventilation von einem Einsatzbereich, insbesondere zur Frischluftzufuhr von mit Rauch oder Gasen kontaminierten Bereichen, umfassend
- ein Basisgestell (2), mit einem einer Aufstandsfläche (5) zuwendbaren Grundrahmen (6) und zumindest einem vom Grundrahmen (6) aufragenden hinteren Rahmenteil (7),
- einen Heberahmen (4), welcher Heberahmen (4) am Basisgestell (2) um eine in horizontaler Richtung verlaufend ausgerichtete erste Schwenkachse (9) einer ersten Schwenkanordnung (8) verschwenkbar gelagert ist, und
- einen Axiallüfter (3) mit einer Antriebseinheit (10), einem damit in Antriebsverbindung stehenden Lüfterrad und mit einem das Lüfterrad aufnehmenden Lüftergehäuse (11), welcher Axiallüfter (3) am Heberahmen (4) gehalten ist,
- wobei die erste Schwenkanordnung (8) für den Heberahmen (4) einerseits im Bereich des vom Grundrahmen (6) aufragenden Rahmenteils (7) und andererseits in einem ersten, dem hinteren Rahmenteil (7) zugewendeten Endbereich (14) des Heberahmens (4) angeordnet ist,
- wobei der Heberahmen (4) vom hinteren Rahmenteil (7) in Richtung auf eine Frontseite vorragend ausgebildet ist und ein vom ersten Endbereich (14) distanzierter zweiter Endbereich (15) des Heberahmens (4) in seiner vertikalen Distanz bezüglich des Grundrahmens (6) von einer dem Grundrahmen (6) näher liegenden Ruhestellung in eine davon angehobene Einsatzstellung verstellbar ist,
- und wobei am Heberahmen (4) eine zweite Schwenkanordnung (17) mit einer zweiten Schwenkachse (18) angeordnet ist, welche zweite Schwenkanordnung (17) distanziert von der ersten Schwenkanordnung (8) angeordnet ist,
**dadurch gekennzeichnet,**
- **dass** ein Tragrahmen (19) in seiner relativen Lage bezüglich des Grundrahmens (6) am Heberahmen (4) um die zweite Schwenkachse (18) der zweiten Schwenkanordnung (17) verschwenkbar gelagert ist, um dadurch eine Neigungsverstellung des vom Axiallüfter (3) erzeugten Luftstroms durchführen zu können, und
- **dass** der Axiallüfter (3) unter Zwischenschaltung des Tragrahmens (19) am Heberahmen (4) gehalten ist.

2. Lüfteraggregat (1) nach Anspruch 1, **dadurch gekennzeichnet, dass** der Heberahmen (4) durch einen brückenartig ausgebildeten Schwenkarm gebildet ist.

3. Lüfteraggregat (1) nach Anspruch 1 oder 2, **dadurch gekennzeichnet, dass** die erste Schwenkanordnung (8) vom Grundrahmen (6) des Basisgestells (2) in vertikaler Richtung davon distanziert angeordnet ist.

4. Lüfteraggregat (1) nach einem der vorhergehenden Ansprüche, **dadurch gekennzeichnet, dass** die zweite Schwenkachse (18) der zweiten Schwenkanordnung (17) eine parallele Ausrichtung bezüglich der ersten Schwenkachse (9) aufweist.

5. Lüfteraggregat (1) nach einem der vorhergehenden Ansprüche, **dadurch gekennzeichnet, dass** am Basisgestell (2), insbesondere dem hinteren Rahmenteil (7), für die Verstellung des Heberahmens (4) von seiner Ruhestellung in die angehobene Einsatzstellung und vice versa ein Schwenkantrieb (20) angeordnet ist.

6. Lüfteraggregat (1) nach Anspruch 5, **dadurch gekennzeichnet, dass** der Schwenkantrieb (20) mindestens eine Handhabe (21) sowie zumindest einen Gelenkhebel (24) umfasst, und die Handhabe (21) um eine am hinteren Rahmenteil (7) angeordnete dritte Schwenkachse (23) einer dritten Schwenkanordnung (22) verschwenkbar gelagert ist, wobei der zumindest eine Gelenkhebel (24) an seinem ersten Ende (25) gelenkig mit der mindestens eine Handhabe (21) und an seinem zweiten Ende (26) gelenkig mit dem Heberahmen (4) verbunden ist und die dritte Schwenkachse (23) parallel bezüglich der ersten Schwenkachse (9) ausgerichtet ist.

7. Lüfteraggregat (1) nach Anspruch 6, **dadurch gekennzeichnet, dass** die dritte Schwenkanordnung (22) in vertikaler Richtung weiter vom Grundrahmen (6) distanziert angeordnet ist als die erste Schwenkanordnung (8).

8. Lüfteraggregat (1) nach Anspruch 6 oder 7, **dadurch gekennzeichnet, dass** an der mindestens einen Handhabe (21) unter Ausbildung eines Betätigungshebels (27) ein von der dritten Schwenkachse (23) distanziert angeordnetes Schwenklager (28) angeordnet ist, an welchem Schwenklager (28) das erste Ende (25) des Gelenkhebels (24) gelenkig mit der Handhabe (21) verbunden ist.

9. Lüfteraggregat (1) nach einem der vorhergehenden Ansprüche, **dadurch gekennzeichnet, dass** in Richtung der zweiten Schwenkachse (18) gesehen voneinander distanziert jeweils ein Gelenkhebel (24) vorgesehen ist, wobei jeweils die zweiten Enden (26) der Gelenkhebel (24) in fluchtender Ausrichtung bezüglich der zweiten Schwenkachse (18) gelenkig mit dem Heberahmen (4) verbunden sind.

10. Lüfteraggregat (1) nach Anspruch 6, **dadurch gekennzeichnet, dass** die Handhabe (21) durch einen bügelförmigen Rohrrahmen gebildet ist und dieser von einer in etwa in horizontaler Richtung ausgerichteten Transportstellung in eine in etwa in vertikaler Richtung nach oben aufragende Betriebsstellung verschwenkbar ist.

11. Lüfteraggregat (1) nach einem der vorhergehenden Ansprüche, **dadurch gekennzeichnet, dass** der Tragrahmen (19) mit seinem ersten Endabschnitt (29) an der zweiten Schwenkanordnung (17) mit deren zweiten Schwenkachse (18) gelagert ist und mit seinem zweiten Endabschnitt (30) in Richtung auf den hinteren Rahmenteil (7) des Basisgestells (2) ragt.

12. Lüfteraggregat (1) nach einem der vorhergehenden Ansprüche, **dadurch gekennzeichnet, dass** zwischen dem Tragrahmen (19) und dem Heberahmen (4) eine Stellvorrichtung für die Schwenkverstellung des Tragrahmens (19) relativ bezüglich des Heberahmens (4) vorgesehen ist.

13. Lüfteraggregat (1) nach einem der vorhergehenden Ansprüche, **dadurch gekennzeichnet, dass** am Lüftergehäuse (11) des Axiallüfters (3) in einem Austrittsbereich des Luftstroms aus diesem ein Düsenkopf (31) mit einer zentralen Düsenkopfachse (32) in fluchtender Ausrichtung bezüglich einer Lüfterradachse (12) des Lüfterrades zur Beigabe von Wasser sowie gegebenenfalls eines Schaumgemisches zum Luftstrom angeordnet ist und der Düsenkopf (31) mehrere über den Umfang verteilt angeordnete Austrittsöffnungen (33) aufweist.

14. Lüfteraggregat (1) nach Anspruch 13, **dadurch gekennzeichnet, dass** der Düsenkopf (31) hutförmig ausgebildet ist und im Bereich von dessen Austrittsseite durch eine Stirnwand (34) begrenzt ist.

15. Lüfteraggregat (1) nach Anspruch 13 oder 14, **dadurch gekennzeichnet, dass** die Austrittsöffnungen (33) in der Stirnwand (34) angeordnet sowie jeweils in deren Durchströmrichtung auf die von der Düsenkopfachse (32) abgewendete Seite nach außen geneigt verlaufend ausgerichtet sind.

16. Lüfteraggregat (1) nach einem der Ansprüche 13 bis 15, **dadurch gekennzeichnet, dass** eine Querschnittsabmessung der einzelnen Austrittsöffnungen (33) in deren Durchströmrichtung jeweils abnehmend ausgebildet ist.

17. Lüfteraggregat (1) nach einem der Ansprüche 13 bis 16, **dadurch gekennzeichnet, dass** bei zumindest einzelnen der Austrittsöffnungen (33) jeweils in deren Austrittsbereich aus der Stirnwand (34) eine V-förmig ausgebildete Nut (36) mit jeweils die Nut (36) begrenzenden Nutflächen (37) vertieft in der Stirnwand (34) angeordnet ist.

18. Lüfteraggregat (1) nach Anspruch 17, **dadurch gekennzeichnet, dass** jeweils eine von den Nutflächen (37) der Nut (36) gebildete Schnittlinie (38) mit einer Längsachse (39) der jeweiligen Austrittsöffnung (33) einander schneidend angeordnet ist.

19. Lüfteraggregat (1) nach Anspruch 17 oder 18, **dadurch gekennzeichnet, dass** die Nuten (36) sternförmig verteilt über den Umfang angeordnet sind.

20. Lüfteraggregat (1) nach einem der Ansprüche 14 bis 19, **dadurch gekennzeichnet, dass** die Stirnwand (34) des Düsenkopfs (31) kegelstumpfförmig ausgebildet ist.

21. Lüfteraggregat (1) nach einem der Ansprüche 14 bis 20, **dadurch gekennzeichnet, dass** die Stirnwand (34) des Düsenkopfs (31) außenseitig sowie in ihrem Zentrum eine in senkrechter Richtung bezüglich der Düsenkopfachse (32) ausgerichtete Stirnendfläche (35) aufweist.

22. Lüfteraggregat (1) nach einem der Ansprüche 14 bis 21, **dadurch gekennzeichnet, dass** in der Stirnwand (34) des Düsenkopfs (31) in ihrem Zentrumsbereich weiters zumindest eine Durchtrittsöffnung (40) angeordnet ist.

23. Lüfteraggregat (1) nach Anspruch 22, **dadurch gekennzeichnet, dass** die zumindest eine Durchtrittsöffnung (40) einen hohlzylindrisch ausgebildeten Strömungsquerschnitt aufweist.

24. Lüfteraggregat (1) nach Anspruch 22 oder 23, **dadurch gekennzeichnet, dass** die zumindest eine Durchtrittsöffnung (40) parallel bezüglich der Düsenkopfachse (32) verlaufend angeordnet ist.

25. Lüfteraggregat (1) nach einem der vorhergehenden Ansprüche, **dadurch gekennzeichnet, dass** das Lüftergehäuse (11) in seinem Austrittsbereich anschließend an das Lüfterrad ein über den Umfang durchgängiges, spiralförmig angeordnetes Luftleitelement (41) aufweist.

26. Lüfteraggregat (1) nach Anspruch 25, **dadurch gekennzeichnet, dass** das Luftleitelement (41) im Axialschnitt bezüglich einer Lüftergehäuseachse (13) des Lüftergehäuses (11) einen in etwa stromlinienförmig ausgebildeten Luftleitelementquerschnitt aufweist.

## Claims

1. A fan unit (1) for mobile use for ventilating an area in which it is deployed, in particular for circulating fresh air in areas contaminated by smoke or gases, comprising
- a main frame (2) having a base frame (6) which can be positioned facing a support surface (5) and at least one rear frame part (7) extending up from the base frame (6),
- a lifting frame (4), which lifting frame (4) is mounted on the main frame (2) so as to be pivotable about a first pivot axis (9) of a first pivot arrangement (8) extending in the horizontal direction, and
- an axial fan (3) having a drive unit (10), a fan wheel connected thereto in a driving arrangement, and a fan housing (11) accommodating the fan wheel, which axial fan (3) is retained on the lifting frame (4),
- wherein the first pivot arrangement (8) for the lifting frame (4) is disposed on the one hand in the region of the frame part (7) extending up from the base frame (6) and on the other hand in a first end region (14) of the lifting frame (4) facing the rear frame part (7),
- wherein the lifting frame (4) is designed such that it projects out from the rear frame part (7) in the direction towards a front face, and a second end region (15) of the lifting frame (4) spaced apart from the first end region (14) can be adjusted in terms of its vertical distance from the base frame (6) from a non-operating position lying closer to the base frame (6) into a deployment position raised relative thereto,
- and wherein a second pivot arrangement (17) with a second pivot axis (18) is disposed on the lifting frame (4), which second pivot arrangement (17) is disposed at a distance apart from the first pivot arrangement (8),
**characterized in that**
- a support frame (19) is mounted on the lifting frame (4) so as to be pivotable in terms of its relative position with respect to the base frame (6) about the second pivot axis (18) of the second pivot arrangement (17), thereby enabling an inclination of the air flow generated by the axial fan (3) to be adjusted, and
- **in that** the axial fan (3) is retained on the lifting frame (4) with the support frame (19) connected in between.

2. The fan unit (1) according to claim 1, **characterized in that** the lifting frame (4) is formed by a pivot arm of a bridge-type design.

3. The fan unit (1) according to claim 1 or 2, **characterized in that** the first pivot arrangement (8) is disposed at a distance apart from the base frame (6) of the main frame (2) in the vertical direction.

4. The fan unit (1) according to one of the preceding claims, **characterized in that** the second pivot axis (18) of the second pivot arrangement (17) is oriented parallel with the first pivot axis (9).

5. The fan unit (1) according to one of the preceding claims, **characterized in that** a pivot drive (20) is provided on the main frame (2), in particular the rear frame part (7), for moving the lifting frame (4) from its non-operating position into the raised deployment position and vice versa.

6. The fan unit (1) according to claim 5, **characterized in that** the pivot drive (20) comprises at least one handle (21) and at least one articulated lever (24), and the handle (21) is mounted so as to be pivotable about a third pivot axis (23) of a third pivot arrangement (22) disposed on the rear frame part (7), wherein the at least one articulated lever (24) is articulatingly linked to the at least one handle (21) by its first end (25) and is articulatingly linked to the lifting frame (4) by its second end (26) and the third pivot axis (23) is oriented parallel with the first pivot axis (9).

7. The unit (1) according to claim 6, **characterized in that** the third pivot arrangement (22) is disposed farther from the base frame (6) in the vertical direction than the first pivot arrangement (8).

8. The fan unit (1) according to claim 6 or 7, **characterized in that** a pivot bearing (28) is disposed at a distance apart from the third pivot axis (23) on the at least one handle (21) forming an operating lever (27), on which pivot bearing (28) the first end (25) of the articulated lever (24) is articulatingly linked to the handle (21).

9. The fan unit (1) according to one of the preceding claims, **characterized in that** articulated levers (24) are provided respectively, spaced apart from one another in the direction of the second pivot axis (18), wherein in each case the second ends (26) of the articulated levers (24) are articulatingly connected to the lifting frame (4) in alignment with the second pivot axis (18).

10. The fan unit (1) according to claim 6, wherein the handle (21) is formed by a bow-shaped tubular frame and can be pivoted from a transport position oriented in an approximately horizontal direction into an operating position extending upright in an approximately vertical direction.

11. The fan unit (1) according to one of the preceding claims, **characterized in that** the support frame (19) is mounted by its first end portion (29) on the second pivot arrangement (17) with its second pivot axis (18) and extends by its second end portion (30) in the direction towards the rear frame part (7) of the main frame (2).

12. The fan unit (1) according to one of the preceding claims, **characterized in that** an adjusting device is provided between the support frame (19) and the lifting frame (4) for pivoting adjustment of the support frame (19) relative to the lifting frame (4).

13. The fan unit (1) according to one of the preceding claims, **characterized in that** a nozzle head (31) is disposed on the fan housing (11) of the axial fan (3) in an outlet region of the air flow from the axial fan (3), having a central nozzle head axis (32) aligned flush with a fan wheel axis (12) of the fan wheel for adding water and optionally a foaming mixture to the air flow, and the nozzle head (31) has a plurality of outlet orifices (33) distributed around the circumference.

14. The fan unit (1) according to claim 13, **characterized in that** the nozzle head (31) is designed to be hat-shaped and is delimited by a front wall (34) in the region of its outlet side.

15. The fan unit (1) according to claim 13 or 14, **characterized in that** the outlet orifices (33) are disposed in the front wall (34) and respectively extend in an outwardly inclined arrangement in their flow direction towards the side facing away from the nozzle head axis (32).

16. The fan unit (1) according to one of claims 13 to 15, **characterized in that** a cross-sectional dimension of the individual outlet orifices (33) respectively decreases in their flow direction.

17. The fan unit (1) according to one of claims 13 to 16, **characterized in that** at least individual ones of the outlet orifices (33) are respectively provided with a V-shaped groove (36) in their outlet region from the front wall (34), having groove surfaces (37) bounding the groove (36) recessed into the front wall (34).

18. The fan unit (1) according to claim 17, **characterized in that** a section line (38) formed by the groove surfaces (37) of the groove (36) is arranged so as to intersect with a longitudinal axis (39) of the respective outlet orifice (33).

19. The fan unit (1) according to claim 17 or 18, **characterized in that** the grooves (36) are disposed in a star shape distributed around the circumference.

20. The fan unit (1) according to one of claims 14 to 19, **characterized in that** the front wall (34) of the nozzle head (31) is of a frustoconical design.

21. The fan unit (1) according to one of claims 14 to 20, **characterized in that** the front wall (34) of the nozzle head (31) has a front face (35) on the outside and at its center, oriented in the direction perpendicular to the nozzle head axis (32).

22. The fan unit (1) according to one of claims 14 to 21, **characterized in that** at least one orifice (40) is also disposed in the front wall (34) of the nozzle head (31) in its center region.

23. The fan unit (1) according to claim 22, **characterized in that** the at least one orifice (40) has a hollow cylindrical flow cross-section.

24. The fan unit (1) according to claim 22 or 23, **characterized in that** the at least one orifice (40) extends parallel with the nozzle head axis (32).

25. The fan unit (1) according to one of the preceding claims, **characterized in that** the fan housing (11) has a continuous, spiral-shaped air baffle element (41) around the circumference in its outlet region adjoining the fan wheel.

26. The fan unit (1) according to claim 25, **characterized in that** the air baffle element (41) has an air baffle element cross-section of an approximately streamlined shape in axial section relative to a fan housing axis (13) of the fan housing (11).

## Revendications

1. Groupe de ventilateur (1) pour l'utilisation mobile en vue de la ventilation d'une zone d'utilisation, en particulier en vue de l'amenée d'air frais dans des zones contaminées par des fumées ou des gaz, comprenant
- un bâti de base (2) avec un cadre de base (6) pouvant être tourné vers une surface d'appui (5) et au moins une partie de cadre (7) arrière s'élevant à partir du cadre de base (6),
- un cadre de levage (4), lequel cadre de levage (4) est supporté sur le bâti de base (2) pouvant pivoter autour d'un premier axe de pivotement (9), orienté dans la direction horizontale, d'un premier ensemble de pivotement (8), et
- un ventilateur axial (3) avec une unité d'entraînement (10), une roue de ventilateur en liaison d'entraînement avec elle, et avec un carter de ventilateur (11) qui reçoit la roue de ventilateur, lequel ventilateur axial (3) est retenu sur le cadre de levage (4),
- dans lequel le premier ensemble de pivotement (8) pour le cadre de levage (4) est disposé d'une part dans la zone de la partie de cadre (7) s'élevant à partir du cadre de base (6), et d'autre part dans une première zone d'extrémité (14) du cadre de levage (4) qui est tournée vers la partie de cadre (7) arrière,
- dans lequel le cadre de levage (4) est constitué en dépassant de la partie de cadre (7) arrière en direction d'un côté frontal, et une deuxième zone d'extrémité (15) du cadre de levage (4), distante de la première zone d'extrémité (14), peut être déplacée en ce qui concerne sa distance verticale par rapport au cadre de base (6), à partir d'une position de repos plus proche du cadre de base (6) vers une position d'utilisation relevée à partir de la position de repos,
- et dans lequel un deuxième ensemble de pivotement (17) avec un deuxième axe de pivotement (18) est disposé sur le cadre de levage (4), lequel deuxième ensemble de pivotement (17) est disposé à distance du premier ensemble de pivotement (8),
**caractérisé en ce que**
- en ce qui concerne sa position relative par rapport au cadre de base (6) sur le cadre de levage (4), un cadre porteur (19) est supporté en pivotement autour du deuxième axe de pivotement (18) du deuxième ensemble de pivotement (17) afin de pouvoir ainsi effectuer un déplacement d'inclinaison du flux d'air produit par le ventilateur axial (3),
et
- **en ce que** le ventilateur axial (3) est retenu sur le cadre de levage (4) avec interposition du cadre porteur (19).

2. Groupe de ventilateur (1) selon la revendication 1, **caractérisé en ce que** le cadre de levage (4) est formé par un bras pivotant constitué en forme de pont.

3. Groupe de ventilateur (1) selon la revendication 1 ou 2, **caractérisé en ce que** le premier ensemble de pivotement (8) est disposé à distance du cadre de base (6) du bâti de base (2) dans la direction verticale.

4. Groupe de ventilateur (1) selon l'une des revendications précédentes, **caractérisé en ce que** le deuxième axe de pivotement (18) du deuxième ensemble de pivotement (17) présente une orientation parallèle par rapport au premier axe de pivotement (9).

5. Groupe de ventilateur (1) selon l'une des revendications précédentes, **caractérisé en ce que**, sur le bâti de base (2), en particulier sur la partie de cadre (7) arrière, il est disposé un entraînement pivotant (20) pour le déplacement du cadre de levage (4) à partir de sa position de repos vers la position d'utilisation relevée et vice versa.

6. Groupe de ventilateur (1) selon la revendication 5, **caractérisé en ce que** l'entraînement pivotant (20) comprend au moins une manette (21) ainsi qu'au moins un levier articulé (24), et la manette (21) est supportée de façon pivotante autour d'un troisième axe de pivotement (23) d'un troisième ensemble de pivotement (22) qui est disposé sur la partie de cadre (7) arrière, dans lequel le levier articulé (24) au moins au nombre de un est, à sa première extrémité (25), raccordé de façon articulée à la manette (21) au moins au nombre de un et est, à sa deuxième extrémité (26), raccordé de façon articulée au cadre de levage (4), et le troisième axe de pivotement (23) est orienté parallèlement par rapport au premier axe de pivotement (9).

7. Groupe de ventilateur (1) selon la revendication 6, **caractérisé en ce que** le troisième ensemble de pivotement (22) est disposé plus loin du cadre de base (6) dans la direction verticale que ne l'est le premier ensemble de pivotement (8).

8. Groupe de ventilateur (1) selon la revendication 6 ou 7, **caractérisé en ce qu'**un palier pivotant (28) disposé à distance du troisième axe de pivotement (23) est disposé sur la manette (21) au moins au nombre de un avec formation d'un levier d'actionnement (27), sur lequel palier pivotant (28) la première extrémité (25) du levier articulé (24) est raccordée de façon articulée à la manette (21).

9. Groupe de ventilateur (1) selon l'une des revendications précédentes, **caractérisé en ce que**, vu en direction du deuxième axe de pivotement (18), il est prévu respectivement un levier articulé (24) séparé de l'autre, dans lequel respectivement les deuxièmes extrémités (26) des leviers articulés (24) sont raccordées de façon articulée au cadre de levage (4) dans une orientation en affleurement par rapport au deuxième axe de pivotement (18).

10. Groupe de ventilateur (1) selon la revendication 6, **caractérisé en ce que** la manette (21) est formée d'un cadre tubulaire en forme d'étrier, et celui-ci peut être conduit à pivoter à partir d'une position de transport orientée à peu près dans la direction verticale vers une position de fonctionnement dépassant vers le haut dans une direction à peu près verticale.

11. Groupe de ventilateur (1) selon l'une des revendications précédentes, **caractérisé en ce que** le cadre porteur (19) avec son premier tronçon d'extrémité (29) est supporté sur le deuxième ensemble de pivotement (17) avec son deuxième axe de pivotement (18), et dépasse, avec son deuxième tronçon d'extrémité (30), en direction de la partie de cadre (7) arrière du bâti de base (2).

12. Groupe de ventilateur (1) selon l'une des revendications précédentes, **caractérisé en ce que**, entre le cadre porteur (19) et le cadre de levage (4), il est prévu un dispositif de déplacement pour le déplacement pivotant du cadre porteur (19) par rapport au cadre de levage (4).

13. Groupe de ventilateur (1) selon l'une des revendications précédentes, **caractérisé en ce que**, sur le carter de ventilateur (11) du ventilateur axial (3), dans une zone de sortie du flux d'air à partir de celui-ci, il est disposé une tête de buse (31) avec un axe de tête de buse (32) central orienté en affleurement par rapport à un axe de roue de ventilateur (12) de la roue de ventilateur pour l'addition d'eau et éventuellement d'un mélange de mousse au flux d'air, et la tête de buse (31) comporte plusieurs orifices de sortie (33) disposés de façon répartie sur la circonférence.

14. Groupe de ventilateur (1) selon la revendication 13, **caractérisé en ce que** la tête de buse (31) est constituée en forme de chapeau et est limitée dans la zone de son côté de sortie par une paroi frontale (34).

15. Groupe de ventilateur (1) selon la revendication 13 ou 14, **caractérisé en ce que** les orifices de sortie (33) sont disposés dans la paroi frontale (34) de même qu'ils sont orientés respectivement dans leur direction d'écoulement vers le côté éloigné de l'axe de tête de buse (32) en étant inclinés vers l'extérieur.

16. Groupe de ventilateur (1) selon l'une des revendications 13 à 15, **caractérisé en ce qu'**une dimension de section transversale des différents orifices de sortie (33) est constituée de façon respectivement décroissante dans leur direction d'écoulement.

17. Groupe de ventilateur (1) selon l'une des revendications 13 à 16, **caractérisé en ce que**, pour au moins quelques-uns des orifices de sortie (33), respectivement dans leur zone de sortie à partir de la paroi frontale (34), il est disposé une rainure (36) constituée en forme de V avec respectivement des surfaces de rainures (37) limitant respectivement la rainure (36) et enfoncées dans la paroi frontale (34).

18. Groupe de ventilateur (1) selon la revendication 17, **caractérisé en ce que** respectivement une ligne d'intersection, (38) formée par les surfaces de rainure (37) de la rainure (36), est disposée en se coupant avec un axe longitudinal (39) de l'orifice de sortie (33) respectif.

19. Groupe de ventilateur (1) selon la revendication 17 ou 18, **caractérisé en ce que** les rainures (36) sont disposées en étant réparties en forme d'étoile sur la périphérie.

20. Groupe de ventilateur (1) selon l'une des revendications 14 à 19, **caractérisé en ce que** la paroi frontale (34) de la tête de buse (31) est constituée en forme de tronc de cône.

21. Groupe de ventilateur (1) selon l'une des revendications 14 à 20, **caractérisé en ce que** la paroi frontale (34) de la tête de buse (31) comporte, côté extérieur ainsi qu'en son centre, une surface d'extrémité frontale (35) orientée dans la direction verticale par rapport à l'axe de tête de buse (32).

22. Groupe de ventilateur (1) selon l'une des revendications 14 à 21, **caractérisé en ce qu'**il est en outre disposé au moins un orifice de passage (40) dans la zone centrale de la paroi frontale (34) de la tête de buse (31).

23. Groupe de ventilateur (1) selon la revendication 22, **caractérisé en ce que** l'orifice de passage (40) au moins au nombre de un présente une section transversale d'écoulement constituée en forme de cylindre creux.

24. Groupe de ventilateur (1) selon la revendication 22 ou 23, **caractérisé en ce que** l'orifice de passage (40) au moins au nombre de un est disposé parallèlement par rapport à l'axe de tête de buse (32).

25. Groupe de ventilateur (1) selon l'une des revendications précédentes, **caractérisé en ce que**, dans sa zone de sortie, à la suite de la roue de ventilateur, le carter de ventilateur (11) comporte un élément de guidage d'air (41) en forme de spirale disposé de façon continue sur la périphérie.

26. Groupe de ventilateur (1) selon la revendication 25, **caractérisé en ce que**, en coupe axiale par rapport à un axe de carter de ventilateur (13) du carter de ventilateur (11), l'élément de guidage d'air (41) présente une section transversale d'élément de guidage d'air constituée à peu près de façon aérodynamique.
